(19) Europäisches Patentamt
European Patent Office
Office européen des brevets

(11) EP 0 792 682 A1

(12) **EUROPÄISCHE PATENTANMELDUNG**

(43) Veröffentlichungstag:
**03.09.1997 Patentblatt 1997/36**

(51) Int. Cl.[6]: **B01J 13/16**

(21) Anmeldenummer: **97102541.6**

(22) Anmeldetag: **17.02.1997**

(84) Benannte Vertragsstaaten:
**BE DE ES FR GB IT**

(30) Priorität: **29.02.1996 DE 19607632**

(71) Anmelder: **BAYER AG**
**51368 Leverkusen (DE)**

(72) Erfinder:
- **Nehen, Ulrich, Dr.**
  **51373 Leverkusen (DE)**
- **Weisser, Jürgen, Dr.**
  **41542 Dormagen (DE)**

(54) **Mikrokapseln mit Wänden aus Umsetzungsprodukten von Biuret-Polyisocyanaten und Guanidinen**

(57) Neue Mikrokapseln sind dadurch gekennzeichnet, daß ihre Wände aus Umsetzungsprodukten von Guanidinverbindungen und aliphatischen, Biuretgruppen aufweisenden Polyisocyanaten bestehen oder solche Umsetzungsprodukte enthalten. Diese Mikrokapseln eignen sich besonders zur Herstellung von kohlefreien Durchschreibepapieren, bei denen die Kapseln besonders dicht sind und eine niedrigviskose Dispersion bilden.

EP 0 792 682 A1

**Beschreibung**

Die vorliegende Erfindung betrifft Mikrokapseln mit Wänden aus Umsetzungsprodukten von Biuret-Polyisocyanaten und Guanidinen, deren Herstellung und verbesserte Durchschreibepapiere, die solche Mikrokapseln enthalten.

Mikrokapseln mit Wänden aus Polyharnstoff oder Polyharnstoff-Polyurethan werden üblicherweise nach einem Zweiphasen-Polyadditionsverfahren hergestellt. Dazu emulgiert man eine Ölphase, die ein organisches, mit Wasser nicht mischbares, inertes Lösungsmittel, Polyisocyanat und den zu verkapselnden Stoff enthält, in einer wäßrigen Phase, die Wasser und gegebenenfalls Zusatzstoffe wie Emulgatoren, Stabilisatoren und/oder die Koaleszenz verhindernde Stoffe enthält. Wenn man dieser Emulsion ein Polyamin oder einen Aminoalkohol zufügt, beginnt an der Grenzfläche der Öltröpfchen zur Wasserphase eine Polyadditionsreaktion von Amino- und/oder Hydroxylgruppen mit Isocyanatgruppen. Dies führt zu einer Umhüllung der Öltröpfchen mit einer Polyharnstoff- oder Polyharnstoff-Polyurethan-Wand. So bildet sich eine Dispersion von Mikrokapseln, die den zu verkapselnden Stoff und das organische Lösungsmittel enthalten. Die Größe der Mikrokapseln entspricht etwa der Größe der emulgierten Öltröpfchen.

Auch Wasser kann in die Polyadditionsreaktion eingreifen, z.B. indem es Isocyanatgruppen hydrolysiert, wobei Aminogruppen entstehen, die dann mit noch vorhandenen Isocyanatgruppen reagieren können.

Die Mengenverhältnisse der Reaktionspartner für die Polyaddition wählt man im allgemeinen so, daß alle vorhandenen Isocyanatgruppen abreagieren.

Als Polyisocyanate können die verschiedensten zwei- und höherfunktionellen Isocyanate mit aliphatischer oder aromatischer Struktur eingesetzt werden und als Polyamine die verschiedensten zwei- oder mehr $NH_2$-Gruppen pro Molekül enthaltenden Amine mit aliphatischer Struktur. Es können auch Hydrazin, Hydrazin-Derivate und/oder Aminoalkohole, die pro Molekül mindestens eine $NH_2$- und mindestens eine OH-Gruppe enthalten, eingesetzt werden.

Bekannte Mikroverkapselungsverfahren sind beispielsweise beschrieben in EP-A 227 562, DE-A 3 620 347, DE-A 3 635 823, JP-Anm. 231 377 vom 14. 09. 1987, EP-A 392 876 und US-A 5 164 216.

Es ist auch schon vorgeschlagen worden, Salze von Polyaminen einzusetzen. Hierbei werden aus diesen durch Zusatz von Alkali freie, zur Polyaddition befähigte Amine erzeugt (siehe z.B. JP-PS 42-77 027).

Das wichtigste Gebiet, auf dem Mikrokapseln angewendet werden, ist die Herstellung kohlefreier Durchschreibepapiere. Die Mikrokapseln enthalten in diesem Fall einen Farbstoffvorläufer. Beim Schreiben werden die Mikrokapseln an den Stellen zerstört, wo hinlänglich hoher Druck ausgeübt wird. Der austretende Farbstoffvorläufer ergibt dann unter der Einwirkung eines Entwicklers ein Schriftbild. Die Intensität des Schriftbildes und die Geschwindigkeit, mit der sich aus dem Farbstoffvorläufer das Schriftbild ergibt, sind u.a. von der mechanischen und chemischen Beschaffenheit der Kapselwand abhängig und häufig nicht voll befriedigend.

Die bisher eingesetzten Polyamine und Aminoalkohole werden über chlororganische Zwischenprodukte hergestellt. Bei deren Herstellung und Handhabung muß ein gewisser Aufwand getrieben werden, um die ökologische Unbedenklichkeit zu gewährleisten. Hydrazinverbindungen sind als solche giftig und erfordern deshalb auch erhöhten Aufwand bei ihrer Handhabung.

Es wurden nun Mikrokapseln gefunden, die dadurch gekennzeichnet sind, daß ihre Wände aus Umsetzungsprodukten von Guanidinverbindungen und aliphatischen, Biuretgruppen aufweisenden Polyisocyanaten bestehen oder solche Umsetzungsprodukte enthalten.

Die Stammverbindung Guanidin ist im Gegensatz zu organischen Aminen aus den preiswerten und gut handhabbaren anorganischen Rohstoffen Kalk, Koks und Stickstoff ohne die Verwendung von elementarem Chlor zugänglich (siehe z.B. Ullmanns Encyclopädie der technischen Chemie, 4. Auflage, Weinheim 1975, Band 9, Seiten 70 und 642; Band 10, Seite 146 und Band 12, Seite 411).

Die erfindungsgemäß mit Hilfe von Biuretgruppen enthaltenden, aliphatischen Polyisocyanaten und Guanidinverbindungen hergestellten Mikrokapseln lassen sich äußerst leicht und vor allem agglomeratfrei und in stark konzentrierten wäßrigen Dispersionen herstellen. Dies ist neben der ökologisch günstigen Rohstoffbasis ein besonderer anwendungstechnischer Vorteil erfindungsgemäßer Mikrokapseln.

Für die Herstellung erfindungsgemäßer Mikrokapseln kommen als Guanidinverbindungen beispielsweise solche der Formel (I) in Frage

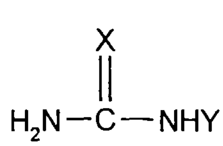

(I)

in der

X für HN=,

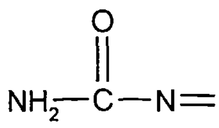 oder 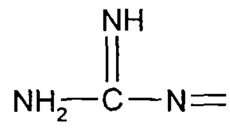

und

Y für H-, NC- $H_2N$-, HO,

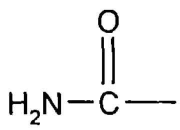 oder 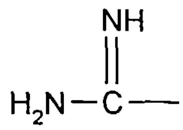

stehen,

sowie deren Salze mit Säuren.

Beispielsweise kann es sich bei den Salzen um Salze von Kohlensäure, Salpetersäure, Schwefelsäure, Salzsäure, Kieselsäure, Phosphorsäure, Ameisensäure und/oder Essigsäure handeln. Der Einsatz von Salzen von Guanidinverbindungen der Formel (I) kann in Kombination mit anorganischen Basen erfolgen, um in situ aus den Salzen die freien Guanidinverbindungen der Formel (I) zu erhalten. Als anorganische Basen für diesen Zweck kommen z.B. Alkali- und/oder Erdalkalihydroxide und/oder Erdalkalioxide in Frage. Bevorzugt sind wäßrige Lösungen oder Aufschlämmungen dieser Basen, insbesondere wäßrige Natronlauge, wäßrige Kalilauge und wäßrige Lösungen oder Aufschlämmungen von Calciumhydroxid. Es können auch Kombinationen mehrerer Basen angewendet werden.

Häufig ist es vorteilhaft, die Guanidinverbindungen der Formel (I) als Salze einzusetzen, weil sie in dieser Form im Handel erhältlich und die freien Guanidinverbindungen zum Teil in Wasser schwer löslich oder nicht lagerstabil sind. Wenn man anorganische Basen einsetzt, können diese in stöchiometrischen, unterstöchiometrischen und überstöchiometrischen Mengen, bezogen auf Salze von Guanidinverbindungen, verwendet werden. Vorzugsweise setzt man 10 bis 100 Äquivalent-% anorganische Base (bezogen auf Salze der Guanidinverbindungen) ein. Die Zugabe anorganischer Basen hat zur Folge, daß bei der Mikroverkapselung in der wäßrigen Phase Guanidinverbindungen mit freien $NH_2$-Gruppen zur Reaktion mit den in der Ölphase enthaltenden Polyisocyanaten zur Verfügung stehen. Bei der Mikroverkapselung erfolgt die Zugabe von Salzen von Guanidinverbindungen und Basen zweckmäßigerweise so, daß man sie getrennt und vorzugsweise in gelöster Form der wäßrigen Phase zufügt.

Vorzugsweise wird Guanidin oder werden Salze von Guanidin mit Kohlensäure, Salpetersäure, Schwefelsäure, Salzsäure, Kieselsäure, Phosphorsäure, Ameisensäure und/oder Essigsäure eingesetzt.

Besonders vorteilhaft ist es, Salze von Guanidinverbindungen mit schwachen Säuren einzusetzen. Diese befinden sich in wäßrige Lösung in Folge von Hydrolyse im Gleichgewicht mit der entsprechenden freien Guanidinverbindung. Die freie Guanidinverbindung wird während des Verkapselungsprozesses verbraucht und bildet sich gemäß dem Massenwirkungsgesetz laufend nach. Diesen Vorteil zeigt in besonderer Weise das Guanidincarbonat (IA).

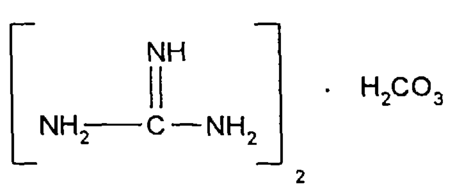 (IA)

Beim Einsatz von Salzen von Guanidinverbindungen mit schwachen Säuren ist ein Zusatz anorganischer Basen zur Freisetzung der freien Guanidinverbindungen nicht erforderlich.

Die für die vorliegende Erfindung in Frage kommenden Guanidinverbindungen der Formel (I) können auch durch Ionenaustausch aus ihren wasserlöslichen Salzen nach dem Stand der Technik mit Hilfe handelsüblicher basischer Ionenaustauscher hergestellt werden. Man kann das Eluat aus dem Ionenaustauscher direkt zur Kapselwandbildung heranziehen, indem man es mit der Öl-in-Wasser-Emulsion vermischt.

Beispielsweise kann man soviel Guanidinverbindungen, insbesondere Guanidincarbonat, einsetzen, daß pro Mol NCO-Gruppen, die als Polyisocyanat in der Ölphase vorliegen, 0,1 bis 1,0 mol Guanidincarbonat oder entsprechende Mengen anderer Guanidinverbindungen in die Wasserphase eingebracht werden. Vorzugsweise beträgt diese Menge 0,5 bis 1,5 mol. Beim Einsatz von Guanidinverbindungen in unterstöchiometrischer Menge verbleiben nach der Reaktion mit dem Polyisocyanat noch freie NCO-Gruppen. Diese reagieren dann im allgemeinen mit Wasser, was üblicherweise nicht kritisch ist, weil dabei neue, freie, zur Vernetzung befähigte Aminogruppen entstehen.

Vorzugsweise werden die Guanidinverbindungen in Form wäßriger Lösungen eingesetzt. Die Konzentration solcher Lösungen ist unkritisch und im allgemeinen nur durch die Löslichkeit der Guanidinverbindungen im Wasser begrenzt. Geeignet sind z.B. 1 bis 20 gew.-%ige wäßrige Lösungen von Guanidinverbindungen.

Als Polyisocyanate werden zur Herstellung erfindungsgemäßer Mikrokapseln aliphatische Biuretgruppen aufweisende Polyisocyanate eingesetzt. Hierbei kann es sich z.B. um Oligomere des Hexamethylendiisocyanats handeln, die Biuretstruktur aufweisen. Besonders vorteilhaft sind Isocyanate, die hohe Anteile von Verbindungen der Formel (II) enthalten:

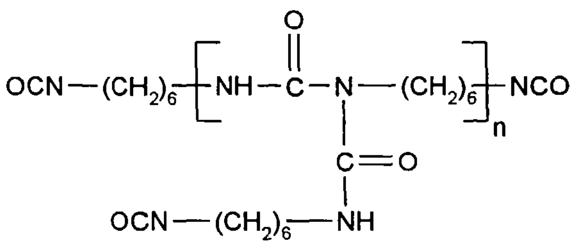

(II),

in der n für eine ganze Zahl im Bereich von 1 bis 10 steht, und die in lösungsmittelfreier Form beispielsweise 18 bis 25 Gew.-% NCO-Gruppen aufweisen.

Bei der technischen Herstellung von Isocyanaten der Formel (II) entstehen u.a. auch höhermolekulare Anteile von Additionsprodukten des Hexamethylendiisocyanats oder Verbindungen mit unterschiedlicher NCO-Verknüpfung. Somit können in untergeordnetem Maße, z.B. bis zu 20 Mol-%, auch Verbindungen der Formeln

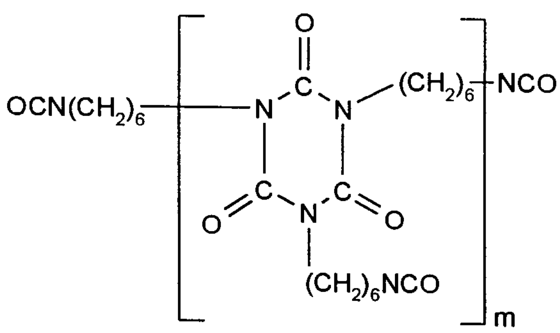

(III)

und/oder

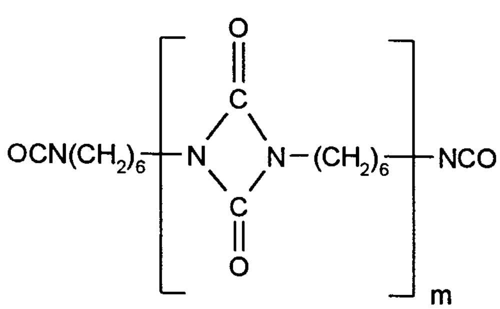

(IV)

in denen m jeweils für eine ganze Zahl im Bereich von 1 bis 10 steht, in den erfindungsgemäß einzusetzenden Mischungen enthalten sein, wie es häufig bei Einsatz handelsüblicher Produkte der Fall ist. Dabei beträgt das Verhältnis von m:n vorzugsweise mehr als 4:1.

Technische Isocyanate, die überwiegend das Biuret des Hexamethylendiisocyanats (Formel (II)) enthalten, lassen sich überraschenderweise bei Vernetzung mit Guanidinverbindungen zu hochwertigeren Mikrokapseln besser verarbeiten als es beim Einsatz von Isocyanaten mit überwiegenden Strukturanteilen der Formeln (III) und/oder (IV) der Fall ist. Isocyanate, wie sie erfindungsgemäß bevorzugt eingesetzt werden, sind beispielsweise in J. prakt. Chem. 336, 185-200 (1994) beschrieben.

Aliphatische, Biuretgruppen aufweisende Polyisocyanate können z.B. in einer Menge von 3 bis 15 %, bezogen auf die Gesamtmenge der zu verkapselnden Ölphase, eingesetzt werden.

Die erfindungsgemäßen Mikrokapseln werden vorzugsweise zur Herstellung kohlefreier Durchschreibepapiere verwendet. Sie enthalten deshalb als verkapselten Stoff vorzugsweise Farbstoffvorläufer. Es kommen hierfür Farbstoffvorläufer der verschiedensten Typen in Frage, insbesondere Triphenylmethanverbindungen, Diphenylmethanverbindungen, Bisindolylphthalidverbindungen, Bisarylcarbazolylmethanverbindungen, Xanthenverbindungen, Benzoxazinverbindungen, Thiazinverbindungen und Spiropyranverbindungen insbesondere solche, die als Farbstoffvorläufer zur Herstellung kohlefreier Durchschreibepapiere bekannt sind. Es können auch Gemische mehrerer Farbstoffvorläufer eingesetzt werden. Einige einsetzbare Farbstoffvorläufer sind z.B. beschrieben in EP-A 591 106, EP-A 315 901, EP-A 234 394, DE-A 3 622 262 und EP-A 187 329.

Als organische mit Wasser nicht mischbare und inerte Lösungsmittel, die bei der Herstellung von Mikrokapseln zusammen mit dem zu verkapselnden Stoff und dem Polyisocyanat Bestandteil der Ölphase sind, kommen z.B. aromatische, aliphatische und naphthenische Kohlenwasserstoffe, Carbonsäureester, chlorierte Paraffine, Öle tierischer und/oder pflanzlicher Herkunft, naturliche Fette mit Schmelzpunkten im Bereich 10 bis 35°C und über 100°C siedende aromatische und/oder aliphatische Ether in Frage. Es können auch Gemische mehrerer Lösungsmittel eingesetzt werden.

Bei der Herstellung erfindungsgemäßer Mikrokapseln kann die wäßrige Phase gegebenenfalls Emulgatoren, Stabilisatoren und/oder die Koaleszenz verhindernde Stoffe enthalten. Emulgatoren kann gegebenenfalls auch die Ölphase enthalten. Die Menge derartiger Zusätze kann z.B. im Bereich 0,01 bis 2 Gew.-%, bezogen auf die jeweilige Phase, liegen.

Erfindungsgemäße Mikrokapseln können nicht nur Farbstoffvorläufer enthalten, sondern auch beispielsweise Parfümöle, Duftstoffe, Klebstoffe, Pharmazeutika, Insektizide, Fungizide, Herbizide und Repellants. Die zu verkapselnden Stoffe dürfen unter den Verkapselungsbedingungen natürlich nicht mit Isocyanaten reagieren.

Erfindungsgemäße Mikrokapseln können nach an sich bekannten kontinuierlichen und diskontinuierlichen Verfahren hergestellt werden, wobei dann als Isocyanate aliphatische Biuretgruppen enthaltende Isocyanate einzusetzen sind- Besonders vorteilhaft setzt man als Guanidinverbindung Guanidincarbonat ein, da dann die freie Base Guanidin nicht gesondert hergestellt werden muß, z.B. durch Zusatz von anorganischen Basen oder durch Ionenaustausch.

Man kann sowohl die Herstellung der Emulsion, enthaltend Tröpfchen einer aliphatisches Biuret-Isocyanat enthaltenden Ölphase und eine kontinuierliche wäßrige Phase, als auch die Zugabe von Guanidinverbindungen kontinuierlich und diskontinuierlich durchführen.

Diskontinuierlich kann man z.B. so verfahren, daß man zu einer Emulsion, die aliphatische Biuret-Isocyanate enthaltende Öltröpfchen etwa in der Größe der gewünschten Mikrokapseln enthalt, bei 10 bis 50°C soviel Guanidincarbonat zufügt, wie stöchiometrisch für die Reaktion aller in der Ölphase vorhandenen Isocyanatgruppen benötigt wird. Bei Guanidincarbonat (Formel (IA)) wird davon ausgegangen, daß ein Mol davon mit 4 mol NCO-Gruppen reagieren kann.

Das Zusammentreffen von Guanidincarbonat und in der Ölphase befindlichen aliphatsichen Biuret-Polyisocyanaten bewirkt an den Grenzflächen der Öltröpfchen zur wäßrigen Phase den Start einer Polyadditionsreaktion, die auch als Vernetzung bezeichnet wird. Die Ursache hierfür ist offenbar das Vorhandensein freien Guanidins, das sich in einer Gleichgewichtsreaktion mit Wasser bildet und aus diesem Gleichgewicht durch die Polyaddition permanent entfernt wird. Selbstverständlich kann die Einstellung des Hydrolyse-Gleichgewichts durch Zugabe katalytischer bis stöchiometrischer Mengen an anorganischem Alkali, wie z.B. Natriumhydroxid, Kaliumhydroxid, Lithiumhydroxid, Calciumhydroxid, beschleunigt werden, so dieses gewünscht wird. Diese Polyadditionsreaktion kann man gewünschtenfalls bei erhöhter Temperatur, z.B. bis zum Siedepunkt der wäßrigen Phase, vervollständigen. Es resultiert eine Dispersion von Mikrokapseln in Wasser, deren Kapselgehalt bis zu ca. 60 Gew.-% betragen kann. Unter Kapselgehalt wird dabei das Verhältnis von Gewicht der Ölphase plus Gewicht des aliphatischen Biuretgruppen enthaltenden Isocyanats dividiert durch Gesamtgewicht der Dispersion x 100 verstanden.

Kontinuierlich kann man z.B. so verfahren, daß man in einer Emulgiermaschine im Durchlaufverfahren kontinuierlich eine Emulsion der gewünschten Art und Öltröpfchengröße erzeugt. Danach kann man z.B. bei 25 bis 50°C kontinuierlich eine wäßrige Lösung von Guanidincarbonat zufügen. In weiteren Reaktionsgefäßen kann dann, gegebenenfalls bei Temperaturen bis zu 100°C, die Polyadditionsreaktion zu Ende geführt werden.

Die erfindungsgemäßen Mikrokapseln haben eine Reihe von Vorteilen. Sie sind besonders dicht, weisen gute mechanische und chemische Stabilität auf, ergeben beim Einsatz für kohlefreie Durchschreibepapiere schnell ein intensives Schriftbild und werden mit großtechnisch verfügbaren Guanidinverbindungen hergestellt, die aus den Bausteinen Kalk, Koks und Stickstoff in einfacher, kostengünstiger und wenig Aufwand erfordernden Weise zugänglich sind. Außerdem sind Kapseldispersionen, die erfindungsgemäße Mikrokapseln enthalten, weniger viskos als Kapseldispersionen, die andere Kapseln enthalten.

Die vorliegende Erfindung betrifft auch ein Verfahren zur Herstellung von Mikrokapseldispersionen, bei der man eine Ölphase, die ein organisches, mit Wasser nicht mischbares, inertes Lösungsmittel, den zu verkapselnden Stoff und ein aliphatisches Biuret-Polyisocyanat enthält, in einer Wasserphase, die gegebenenfalls Zusatzstoffe enthält, emulgiert und der Emulsion einen Stoff zufügt, der mit Isocyanatgruppen Additionsreaktionen eingehen kann, das dadurch gekennzeichnet ist, daß man der Emulsion, die das aliphatische Biuret-Polyisocyanat enthält, eine Lösung einer Guanidinverbindung zufügt.

Schließlich betrifft die vorliegende Erfindung auch kohlefreie Durchschreibepapiere, die Farbstoffvorläufer in mikroverkapselter Form enthalten und dadurch gekennzeichnet sind, daß die Wände der Mikrokapseln Umsetzungsprodukte von Guanidinverbindung mit aliphatischen Biuret-Polyisocyanaten enthalten.

Für das erfindungsgemäße Herstellungsverfahren für Mikrokapseldispersionen und das erfindungsgemäße kohlefreie Durchschreibepapier gelten die oben gemachten Ausführungen zu den erfindungsgemäßen Mikrokapseln entsprechend.

Prozentangaben bedeuten Gewichtsprozente, soweit nicht anders angegeben ist.

**Beispiele:**

**Beispiele 1 bis 5**

Nach dem Grenzflächen-Polyadditionsverfahren wurden Mikrokapsel-Dispersionen hergestellt, die

a) aus Guanidincarbonat in Verbindung mit

b) verschiedenen Isocyanaten

in gleicher Weise hergestellt wurden. Bei b) handelte es sich um handelsübliche Isocyanate mit überwiegenden Strukturanteilen gemäß nachfolgender Tabelle:

| Beispiel Nr. | Haupt-Strukturanteil (über 80 Mol-%) | NCO-Gehalt Gew.-% | z.V. = zum Vergleich erf. = erfindungsgemäß |
|---|---|---|---|
| 1 | 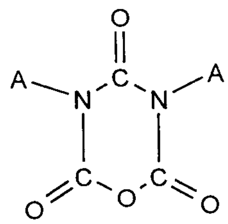 | 20,6 | z. V. |
| 2 | 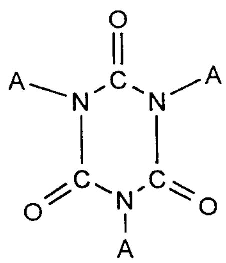 | 21,5 | z. V. |
| 3 | 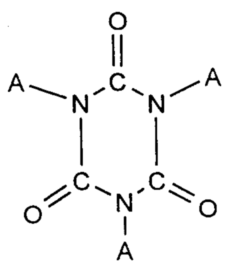 | 22,1 | z. V. |
| 4 | 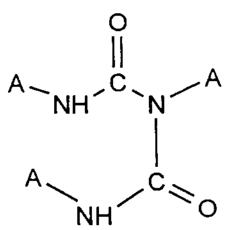 | 23,4 | erf. |
| 5 | 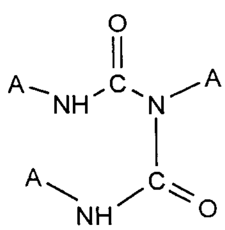 | 22,0 | erf. |

A = $OCN\text{-}(CH_2)_6\text{-}$

Isocyanate entsprechend 1 bis 5 sind im Handel erhältlich.

**Durchführung der Mikroverkapselungen**

Es wurde nach folgender Vorschrift vorgegangen:

475 g einer 3 %igen Lösung von Kristallviolettlacton (Pergascript® Blue I2R, CIBA GEIGY AG) wurden unter Erwärmen in Diisopropylnaphthalin gelöst und bei 40°C mit jeweils 25 g eines Isocyanates aus der Reihe 1 bis 5 vermischt. Die hieraus resultierenden Ölphasen versetzte man mit 500 g einer 1 %igen Lösung von Polyvinylalkohol (AIRVOL® 523, AIR Products and Chemicals Inc.) in deionisiertem Wasser und vermischte grob mittels schnellaufendem Rührer.

Die resulierenden Voremulsionen wurde danach in einem hochtourigen Labor-Dispergiergerät (Megatron® 36-48/MT 4712) zu einer Feinemulsion verarbeitet, wobei eine Tröpfchengröße angestrebt wurde, die der gewünschten Größe der herzustellenden Mikrokapseln nahekam.

So wurden 5 Öl-in-Wasser-Emulsionen erhalten, die jeweils bei 30°C mit 62 g einer wäßrigen 10 %igen Guanidincarbonatlösung vermischt und unter langsamem Rühren innerhalb von 90 Minuten in einem Wasserbad auf 80°C aufgeheizt wurden.

Die fortschreitende Wandbildung der Mikrokapseln war durch leichte Kohlendioxid-Entwicklung zu erkennen. Nach 2 Stunden bei 80°C entnahm man aus jedem Versuch Proben und verarbeitete diese zu folgender Mischung:

| | |
|---|---|
| 2,0 g | Kapseldispersion, Kapselanteil ca. 50 Gew.-% |
| 5,1 g | deionisiertes Wasser |
| 6,65 g | Kieselsol 300 (30 %ige Dispersion von kolloidalem $SiO_2$) |

Nach Homogenisierung wurden je 3 ml der Mischungen jeweils auf das untere Drittel eines DIN A4-Bogens eines Rohpapiers mittels einer Handrakel aufgetragen.

Mittels eines Warmluftgebläses (Fön) wurde ca. 10 min. getrocknet.

In den so beschichteten Papieren lagen somit Mikrokapseln unmittelbar neben feinverteilter Kieselsäure vor, die als Entwickler für das eingekapselte Kristallviolettlacton wirkt, und der Grad der Kapsel-Dichtigkeit konnte optisch anhand der unterschiedlichen Blaufärbung quantitativ erfaßt werden.

Die Blaufärbung wurde mittels eines handelsüblichen Remissionsmeßgerätes (Typ ELREPHO®, Carl Zeiss, Oberkochen) bestimmt, wobei der Meßwert des unbeschichteten Papiers als Nullwert diente.

Die Auswertung erfolgte nach der Formel

$$R = \frac{J_o - J_m}{J_o} \cdot 100$$

$J_o$ = Reflexion des unbeschichteten Papiers
$J_m$ = Reflexion des beschichteten Papiers
R = Verfärbungsgrad des beschichteten Papiers; je größer die Werte, desto intensiver die Verfärbung.

**Ergebnisse:**

| Kapseln aus Beispiel Nr. | Verfärbungsgrad R | |
|---|---|---|
| 1 | 3,9 | zum Vergleich |
| 2 | 0,3 | zum Vergleich |
| 3 | 1,3 | zum Vergleich |
| 4 | 0,0 | erfindungsgemäß |
| 5 | 0,0 | erfindungsgemäß |

Die vorstehenden Ergebnisse zeigen klar, daß Mikrokapseln, die erfindungsgemäß aus aliphatischen Isocyanaten mit überwiegend Biuretstruktur und Guanidinverbindungen hergestellt wurden, im Vergleich zu Kapseln aus Isocyanaten mit hiervon abweichender Struktur die größere Dichtigkeit aufweisen.

**Beispiel 6** (In Anlehnung an US-PS 4 193 889)

In 470 g eines inerten, aromatischen Lösungsmittels (SureSol® 290) wurde ein Gemisch folgender Farbgeber unter Erwärmen auf 98°C gelöst: 24 g BLACK 15 (ESCO Corp.), 3,9 g Kristallviolettlacton und 2,1 g Pergascript® Rot I6B (Ciba Geigy).

5 g Polyvinylalkohol (AIRVOL® 523) wurden innerhalb 30 Minuten bei Raumtemperatur in 495 g deionsiertem Wasser dispergiert und danach unter langsamen Rühren bis zur völligen Auflösung auf 95°C erhitzt.

402,3 g der 50°C warmen Farbgeberlösung wurden mit 27,5 g Biuret-Polyisocyanat (Desmodur® N3200) bis zur Auflösung vermischt und dann mit 120,2 g Isoparaffin (Isopar® L) versetzt und homogenisiert. Die so erhaltene Polyisocyanat enthaltende Lösung wurde mit 391 g der Polyvinylalkohol enthaltenden Lösung vermischt und aus der Mischung mittels eines schnellaufenden Laborrührers eine Voremulsion hergestellt. Diese wurde anschließend in einem hochtourig laufenden Labor-Emulgiergerät unter entsprechender Regelung der Tourenzahl so emulgiert, daß die Emulsion eine mittlere Tröpfchengröße von 6 µm aufwies.

Die so erhaltene Feinemulsion wurde bei Raumtemperatur unter vorsichtigem Rühren mit 58,5 g einer 9 gew.-%igen Lösung von Diethylentriamin in deionisiertem Wasser versetzt, innerhalb einer Stunde mittels eines Wasserbades auf 58°C aufgeheizt und bei dieser Temperatur noch eine Stunde nachgerührt. Es wurde eine hochviskose, kaum rührbare Kapseldispersion (Viskosität bei 25°C 2 850 mPas) mit einem Feststoffgehalt von 57 Gew.-% erhalten. Die Abweichung vom theoretischen Wert ergibt sich durch Verdampfungsverluste während des Nachrührens. Die so erhaltene Mikrokapseldispersion wurde zu einem kohlefreien Durchschreibepapier (CFB-Papier) verarbeitet, dessen Prüfung im Anschluß an Beispiel 7 beschrieben ist.

**Beispiel 7** (erfindungsgemäß)

Es wurde verfahren wie in Beispiel 6, jedoch wurde statt Diethylentriamin 69 g einer 10 gew.-%igen Lösung von Guanidincarbonat in deionisiertem Wasser verwendet und dann 4 Stunden bei 58°C nachgerührt.

Es wurde eine niedrigviskose Kapseldispersion erhalten (Viskosität bei 25°C 185 mPas) mit einem Feststoffgehalt von 55 Gew.-%.

Prüfung der gemäß den Beispielen 6 und 7 erhaltenen Kapseln an einem CFB-Papier (coated front and back-Papier)

CB-Stammlösung

201,3 g Cellulosefasern des Typs Arbocel® BE 600/30 wurden unter intensivem Rühren zu 1 601,3 g deionisiertem Wasser gegeben. Nach einer Rührzeit von 30 Minuten versetzte man diese Dispersion bei reduzierter Rührleistung mit 197,4 g eines handelsüblichen Bindemittels für Papier (Baystal® KA8588).

CB-Streichmasse

20 g der CB-Stammlösung wurden mit 12,8 g der zu untersuchenden Kapseldispersion gut vermischt, wobei letztere vorher durch Wasserzusatz auf einen Feststoffgehalt von 40 Gew.-% eingestellt wurde.

CFB-Papier

Die CB-Streichmasse wurde jeweils mittels einer Handrakel in einer Schichtdicke von 40 µm auf die Rückseite eines handelsüblichen CF-Papiers aufgetragen und in einem Luftstrom getrocknet. Es resultierte eine Beschichtung von 5,5 bis 6 g/ $m^2$.

Die CFB-Papiere wurden in einem Klimaschrank während eines Zeitraumes von 12 Tagen bei 70°C und 75 % rel. Luftfeuchtigkeit gelagert. Danach wurden Prüfsets durch Aufeinanderlegen folgender Papiere hergestellt.

| | |
|---|---|
| oberste Lage: | handelsübliches Rohpapier |
| erste Zwischenlage: | handelsübliches Rohpapier, |
| zweite Zwischenlage: | zu prüfendes CFB-Papier, CB-Seite nach unten |
| dritte Zwischenlage: | zu prüfendes CFB-Papier, CB-Seite nach unten |
| vierte Zwischenlage: | handelsübliches CF-Papier, CF-Seite nach oben |
| unterste Lage: | handelsübliches Rohpapier. |

Jedes der so hergestellten beiden Prüfsets (enthaltend die CFB-Papiere und Kapseln der Beispiele 6 und 7) wurden in eine elektrische Schreibmaschine eingespannt und das oberste Papier flächendeckend mit dem Buchstaben "W" beschriftet. Der auf der Oberseite der vierten Zwischenlage entstandene Abdruck (Kopie des Buchstabens "W") wurde in seiner Farbstärke (Intensität) mittels eines handelsüblichen Farbstärken-Meßgeräts (Typ ELREPHO®) vermessen. Der so ermittelte Intensitäts-Zahlenwert wurde mit demjenigen verglichen, den ein ungealtertes aber sonst völlig gleich hergestelltes Prüfset erbrachte. Die quantitative Auswertung erfolgte nach der Formel

$$R = \frac{J_o - J_m}{J_o} \cdot 100,$$

wobei

$J_o$ die Reflexion des unbeschichteten Papiers und
$J_m$ die Reflexion des beschichteten Papiers bedeutet.

Der Zahlenwert R ist somit eine Meßzahl für die Intensität der erhaltenen Kopie. Je größer der Wert, desto intensiver die Durchschrift. Für das Prüfset, das Papiere mit Mikrokapseln erhalten gemäß Beispiel 6 enthielt, betrug der Intensitätswert vor der Alterung 47,0 % und der Intensitätswert nach der Alterung 0,2 %.

Für das Prüfset, das Papiere mit Mikrokapseln erhalten gemäß Beispiel 7 enthielt, betrug der Intensitätswert vor der Alterung 44,3 % und der Intensitätswert nach der Alterung 42,5 %.

Aus dem Vergleich sieht man deutlich, daß erfindungsgemäße Kapseln nach einer Alterung unter extremen Laborbedingungen praktisch unverändert dicht sind, während Kapseln nach dem Stand der Technik ihre Dichtigkeit praktisch verloren haben.

Eine gute Dichtigkeit der Kapseln und eine niedrige Viskosität der Kapseldispersion sind Eigenschaften, die für eine technische Anwendung von Mikrokapseln besonders wichtig sind.

**Patentansprüche**

**1.** Mikrokapseln, dadurch gekennzeichnet, daß ihre Wände durch Umsetzungsprodukte von Guanidinverbindungen und aliphatischen, Biuretgruppen aufweisenden Polyisocyanaten bestehen oder solche Umsetzungsprodukte enthalten.

**2.** Mikrokapseln nach Anspruch 1, dadurch gekennzeichnet, daß es sich bei der Guanidinverbindung um Guanidincarbonat handelt.

**3.** Mikrokapseln nach Ansprüchen 1 und 2, dadurch gekennzeichnet, daß es sich bei den aliphatischen, Biuretgruppen aufweisenden Polyisocyanaten um technische Produkte handelt, die überwiegend das Biuret des Hexamethylendiisocyanats enthalten.

**4.** Mikrokapseln nach Ansprüchen 1 bis 3, dadurch gekennzeichnet, daß aliphatische, Biuretgruppen aufweisende Polyisocyanate in einer Menge von 3 bis 15 %, bezogen auf die Gesamtmenge der zu verkapselnden Ölphase, eingesetzt wurden.

**5.** Mikrokapseln nach Ansprüchen 1 bis 4, dadurch gekennzeichnet, daß pro Mol NCO-Gruppen die als Polyisocyanat in der Ölphase vorliegen, 0,1 bis 1,0 mol Guanidincarbonat in die Wasserphase eingesetzt wird.

**6.** Mikrokapseln nach Ansprüchen 1 bis 5, dadurch gekennzeichnet, daß sie zur Herstellung kohlefreier Durchschreibepapiere verwendet werden und als verkapselten Stoff Farbstoffvorläufer enthalten.

**7.** Mikrokapseln nach Anspruch 6, dadurch gekennzeichnet, daß der zu verkapselnde Stoff zusätzlich aromatische, aliphatische und/oder naphthenische Kohlenwasserstoffe, Carbonsäureester, chlorierte Paraffine, Öle tierischer und/oder pflanzlicher Herkunft, natürliche Fette mit Schmelzpunkten im Bereich 10 bis 35°C und/oder über 100°C siedende aromatische und/oder aliphatische Ether enthält.

**8.** Verfahren zur Herstellung von Mikrokapseln, bei dem man eine Ölphase, die den zu verkapselnden Stoff, ein mit Wasser nicht mischbares organisches Lösungsmittel und ein Polyisocyanat enthält, mit Wasser, gegebenenfalls unter Zuhilfenahme von Stabilisatoren emulgiert und diese Emulsion mit einem basischen Reaktanden in eine Kapseldispersion umwandelt, dadurch gekennzeichnet, daß es sich bei dem basischen Reaktanden um eine Guanidinverbindung handelt und bei dem Polyisocyanat um ein aliphatisches, Biuretgruppen enthaltendes Polyisocyanat.

9. Verfahren zur Herstellung besonders dichter Mikrokapseln, die eine niedrigviskose Dispersion bilden, bei dem man eine Ölphase, die den zu verkapselnden Stoff, ein mit Wasser nicht mischbares organisches Lösungsmittel und ein Polyisocyanat enthält, mit Wasser, gegebenenfalls unter Zuhilfenahme von Stabilisatoren emulgiert und diese Emulsion mit einem basischen Reaktanden in eine Kapseldispersion umwandelt, dadurch gekennzeichnet, daß es sich bei dem basischen Reaktanden um eine Guanidinverbindung handelt und bei dem Polyisocyanat um ein aliphatisches, Biuretgruppen enthaltendes Polyisocyanat.

10. Kohlefreie Durchschreibepapiere, die Farbstoffvorläufer in mikroverkapselter Form enthalten, dadurch gekennzeichnet, daß die Wände der Kapseln überwiegend durch eine Grenzflächenpolymerisation von aliphatischen, Biuretgruppen aufweisenden Polyisocyanaten mit Guanidinverbindungen erhalten wurden.

Europäisches Patentamt

# EUROPÄISCHER RECHERCHENBERICHT

Nummer der Anmeldung
EP 97 10 2541

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| P,X | EP 0 727 251 A (BAYER AG)<br>* Ansprüche 1-11 *<br>--- | 1-3,5,6 | B01J13/16 |
| A | EP 0 150 790 A (BAYER AG)<br>* Ansprüche 1-10 *<br>----- | | |

RECHERCHIERTE SACHGEBIETE (Int.Cl.6)
B01J

Der vorliegende Recherchenbericht wurde für alle Patentansprüche erstellt

| Recherchenort | Abschlußdatum der Recherche | Prüfer |
|---|---|---|
| DEN HAAG | 30.Mai 1997 | Fouquier, J-P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)